# EUROPEAN PATENT APPLICATION

(11) **EP 3 570 157 A1**
(43) Date of publication of application: **20.11.2019**
(21) Application number: 19168106.3
(22) Date of filing: 09.04.2019
(51) Int. Cl.: G06F 3/147

(54) **ELECTRONIC WHITEBOARD, OUTPUT CONTROL METHOD, CARRIER MEANS, AND DISPLAYING SYSTEM**

(30) Priority: 16.05.2018 JP 2018094834
(71) Applicant: Ricoh Company, Ltd., Tokyo 143-8555 (JP)
(72) Inventor: WATANABE, Yusuke, Tokyo, 143-8555 (JP)
(74) Representative: SSM Sandmair

(57) **Abstract**

An electronic whiteboard (2) includes an information processing device (4) connectable to a display (3). The electronic whiteboard (2) includes a display information acquisition unit (201, 34) to acquire first display information that is information on the display (3) being connected to the information processing device (4). The electronic whiteboard further includes a storage unit (37) to store second display information that indicates whether operation of the display (3) in cooperation with the electronic whiteboard (2) is guaranteed. The electronic whiteboard further includes a determination unit (201, 35) to compare the first display information and the second display information to determine whether the operation of the display (3) is guaranteed. The electronic whiteboard further includes an output unit (201, 33) to output a result of the determination, when the result indicates that the operation of the display (3) is not guaranteed.

## Description

### BACKGROUND

### Technical Field

Embodiments of the present disclosure are related to an electronic whiteboard, an output control method, a carrier means, and a displaying system.

### Related Art

Whiteboards have been often provided in meeting rooms of companies or the like, but, in recent years, electronic whiteboards are increasing to be provided to replace whiteboards. Such an electronic whiteboard is provided with a touch panel display, which is a large size, and the touch panel display displays an image drawn by a user using an electronic pen or his or her finger. The electronic whiteboards are different from the conventional whiteboards in being capable of saving drawn images as electronic data or displaying an image from a personal computer (PC).

The electronic whiteboard includes an information processing device on which application software is executed and a display. The information processing device and the display are connected to each other via a cable through which a video signal or a control signal is transmitted.

In general, a standardized interface is used to connect between an information processing device and a display so that a user can use, in most of the cases, the information processing device and the display together without any problems even when the user gets each of the information processing device and the display from a different manufacturer or vendor.

However, if the display connected to the information processing device is identified, more appropriate control may be possible in some cases, and conventionally, a technique for detecting a type of the display is known (for example, see JP-A-2010-256794). JP-A-2010-256794 discloses a display control method in which extended display identification data (EDID) information is acquired from each of displays, and control a displaying timing based on the EDID information for each display.

However, in such a known technique, whether the operation of the display of the electronic whiteboard is guaranteed or not is not taken into account. As described above, because the interface between the information processing device and the display is standardized, when the information processing device of the electronic whiteboard is connected to the display, an operating system (OS) of the information processing device is activated and a desktop screen or the like can be displayed.

For example, when the operation of the display is not guaranteed by application software executed in the information processing device of the electronic whiteboard, the user fails to use functions of the application software. Conventionally, the user has no way to know whether the operation of the display is guaranteed or not until actually activating the application software. In addition, when functions, which cannot be used because the operation is not guaranteed, or failures, which occurs because the operation is not guaranteed, are difficult to be noticed by the user, the user may end up using the display, which is connected, without being notified of the above mentioned matter.

In view of the above, an object of the present disclosure is to provide an electronic whiteboard capable of notifying a user of that a display of which the operation is not guaranteed is connected.

### SUMMARY

An exemplary embodiment of the present disclosure includes an electronic whiteboard (2) including an information processing device (4) connectable to a display (3). The electronic whiteboard (2) includes a display information acquisition unit (201, 34) to acquire first display information that is information on the display (3) being connected to the information processing device (4). The electronic whiteboard further includes a storage unit (37) to store second display information that indicates whether operation of the display (3) in cooperation with the electronic whiteboard (2) is guaranteed. The electronic whiteboard further includes a determination unit (201, 35) to compare the first display information and the second display information to determine whether the operation of the display (3) is guaranteed. The electronic whiteboard further includes an output unit (201, 33) to output a result of the determination, when the result indicates that the operation of the display (3) is not guaranteed.

According to an embodiment of the disclosure, it is possible to provide an electronic whiteboard capable of notifying a user of that a display of which the operation is not guaranteed is connected.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1A to FIG. 1C are illustrations for describing operation performed by an electronic whiteboard when operation of a display is not guaranteed by application software, according to an embodiment of the disclosure;
FIG. 2 is an illustration of an example of an interface between an information processing device and a display connected by a cable, according to an embodiment of the disclosure;
FIG. 3 is a schematic block diagram illustrating a hardware configuration of an electronic whiteboard, according to an embodiment of the disclosure;
FIG. 4 is a diagram illustrating an example of a software configuration of application software and an operating system (OS), according to an embodiment of the disclosure;
FIG. 5 is an example of a functional block diagram illustrating functions of application software and an OS of an electronic whiteboard, according to an embodiment of the disclosure;
FIG. 6 is an illustration of an example of operation guarantee display information stored in an operation guarantee display information storage unit, according to an embodiment of the disclosure;
FIG. 7 is an illustration of an example of 128-byte extended display identification data (EDID) stored in a registry editor, according to an embodiment of the disclosure;
FIG. 8 is an illustration of byte 8 to byte 11 of EDID represented in a binary digit, according to an embodiment of the disclosure;
FIG. 9 is a flowchart illustrating an example of a process in which an operation guarantee processing unit of an electronic whiteboard determines whether operation of a display being connected to an information processing device is guaranteed by an application, according to an embodiment of the disclosure;
FIG. 10 is a flowchart illustrating an example of a process in which an electronic whiteboard displays a warning screen based on a display flag, according to an embodiment of the disclosure;
FIG. 11 is an illustration of a screen transition corresponding to the flowchart illustrated in FIG. 10, according to an embodiment of the disclosure;
FIG. 12 is a flowchart illustrating an example of a process in which an installer determination unit of an electronic whiteboard determines whether an installer is stored, according to an embodiment of the disclosure;
FIG. 13 is a flowchart illustrating an example of a process in which an electronic whiteboard displays a message screen based on a display flag and performs installation, according to an embodiment of the disclosure;
FIG. 14 is an illustration of a screen transition corresponding to the flowchart illustrated in FIG. 13, according to an embodiment of the disclosure;
FIG. 15 is an illustration for describing installation of application software performed by a user, according to an embodiment of the disclosure; and
FIG. 16 is an illustration of operation guarantee display information that can be commonly used for a plurality of versions of application software, according to an embodiment of the disclosure.

The accompanying drawings are intended to depict example embodiments of the present disclosure and should not be interpreted to limit the scope thereof. The accompanying drawings are not to be considered as drawn to scale unless explicitly noted.

### DETAILED DESCRIPTION

The terminology used herein is for describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof. In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operation in a similar manner, and achieve a similar result.

Hereinafter, a description is given of an electronic whiteboard and a method (output control method), which is performed by the electronic whiteboard, for determining whether operation is guaranteed or not, according to an embodiment, with reference to the drawings.

### Overview of Operation

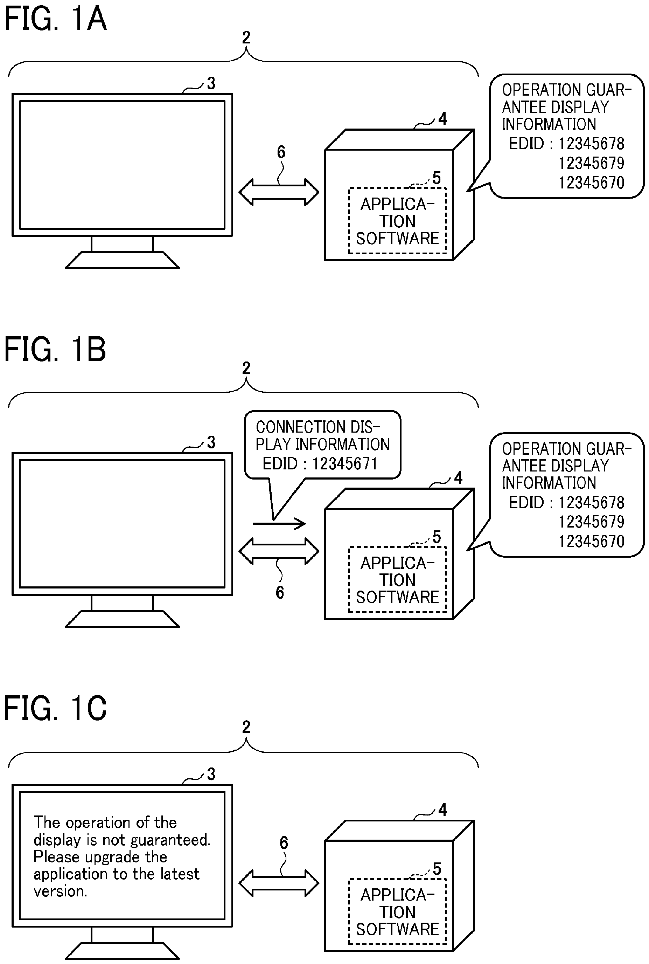

A description is given of an overview of operation of an electronic whiteboard 2 according to an embodiment of the present disclosure, with reference to FIG. 1A to FIG. 1C (FIG. 1). FIG. 1A to FIG. 1C are illustrations for describing operation performed by the electronic whiteboard 2 when operation of a display 3 is not guaranteed by application software 5, according to the present embodiment. As illustrated in FIG. 1 (FIG. 1A to FIG. 1C), the electronic whiteboard 2 includes an information processing device 4 and the display 3, and the information processing device 4 and the display 3 are connected to each other via a cable 6 that transmits a video signal and a control signal. The application software 5 for implementing various functions of the electronic whiteboard 2 is installed on the information processing device 4. In general, the information processing device 4 is attached to a back side of the display 3 or attached under the display 3, but in FIG. 1, the information processing device 4 and the display 3 are illustrated side by side for easy understanding.

As illustrated in FIG. 1A, the application software 5 according to the present embodiment retains operation guarantee display information (second display information) indicating one or more types of display of which operation is guaranteed by the application software 5. Hereinafter, the type of display may also be referred to as a display type. In the present embodiment, extended display identification data (EDID) is used as an example of the operation guarantee display information. A detailed description of the EDID is deferred. In FIG. 1A, the application software 5 retains three of EDID that is "12345678, 12345679, and 12345670".

As illustrated in FIG. 1B, the information processing device 4 acquires, from the display 3, first display information, which is referred to as connection display information, indicating a display type of the display 3 that is currently, or being, connected to the information processing device 4. The EDID is also used as the connection display information. In the example of FIG. 1B, EDID of "12345671" is acquired. The application software 5 compares the connection display information acquired from the display 3 and the operation guarantee display information to determine whether the operation of the display 3 connected to the information processing device 4 is guaranteed or not. In the example of FIG. 1B, the operation guarantee display information does not include the connection display information, and a determination indicating that the operation of the display 3 is not guaranteed is made, accordingly.

As illustrated in FIG. 1C, when a result of the determination indicates that the operation is not guaranteed, the application software 5 causes the display 3 to display, for example, a message indicating that the operation of the display 3, which is currently, or being, connected, is not guaranteed. In the example of FIG, 1C, a message of "The operation of the display is not guaranteed. Please upgrade the application software to the latest version" is displayed.

As described above, the electronic whiteboard 2 according to the present embodiment determines whether the operation of the display 3 connected to the information processing device 4 is guaranteed by the application software 5 or not, and notifies, when the operation is not guaranteed, a user of a message indicating thereof. Accordingly, the electronic whiteboard 2 can notify the user of that the operation of the display 3 is not guaranteed before the user launches the application software 5 for using a function of the electronic whiteboard 2. In addition, even when functions that cannot be used because the operation is not guaranteed, or failures that occurs because the operation is not guaranteed, are difficult to be noticed by the user, it is possible to make sure to notify the user of that the operation is not guaranteed.

### Terms Used in Disclosure

"Operation is guaranteed" means that the vendor or the like has confirmed that parts, or components (in the example of the present embodiment, the display 3 and the application software 5), to be used in combination operate in cooperation with each other. "Operation is not guaranteed" means that the vendor or the like has not confirmed that parts, or components, to be used in combination do not operate in cooperation with each other.

In the example of a combination of the display 3 and the application software 5 in the electronic whiteboard 2, a method of sensing a touch panel may vary depending on the type of the display 3. Due to this, depending on the type of the display 3, the application software 5 may not be compatible with (support) the display 3, and a position of a fingertip or an electronic pen may not be detected, accordingly. In addition, depending on resolution of the display 3, a screen displayed by the application software 5 may not be viewed clearly for the user. To deal with the above-described cases, in the electronic whiteboard 2, guarantee of the operation of a combination of the application software 5 and the display 3 is confirmed.

Accordingly, for example, when the electronic whiteboard 2 accepts a new type of the display 3, or when the version of the application software 5 is changed (in most of the cases, downgraded), the operation of the combination of the application software 5 and the display 3 may be unexpected. This is because the type of the display 3 may become a different one from that supported by the version of the application software 5.

In addition, when the electronic whiteboard 2 and the information processing device 4 are regarded as one unit, it can be said that the guarantee of the operation of the combination of the application software 5 and the display 3 is the guarantee of the operation of a combination of the electronic whiteboard 2 and the display 3 or the guarantee of the operation of a combination of the information processing device 4 and the display 3.

The application software 5 is defined as a program that is prepared for according to a use purpose of a computer and that implements the use purpose. This may be used in comparison with system software such as an operating system (OS). Note that a program that is intermediate between the OS and the application software 5 may be referred to as firmware. Any program that is executable on a device connected to the display 3 can be the application software 5 according to the present embodiment, and a name thereof or what the program is called is irrelevant.

The electronic whiteboard 2 has a function capable of receiving, according to a user operation, addition of information such as characters, diagrams, images, handwritten images, or stamps to a screen being displayed. The electronic whiteboard 2 may be referred to as an electronic information board, a white board (whiteboard), a copy board, an electronic board, or the like. Note that the white board may be implemented by a projector and a white board (an ordinary white board without the display 3), in addition to a type of white board that reads a stroke manually written on a touch panel. Because being shared by a plurality of users, the electronic whiteboard may be also referred to as a shared terminal.

The display means a display device, and may be, for example, a liquid crystal display, an organic electro luminescence (EL) display, or a plasma display. In addition, a projector, a rear projector, or the like may be used.

In the present embodiment, the electronic whiteboard 2 is described as an example of an apparatus or a device including the information processing device 4 and the application software 5, but the disclosure is not limited thereto. For example, the present disclosure can be applied to an apparatus, or a device that is connected to the display 3 or that has the display 3 built in. As an example of such an apparatus, a multifunction peripheral (MFP), which includes the display 3 or to which the display is detachable, may be used. The MFP is an apparatus, or a device, having a plurality of functions such as a scan function, a print function, a copy function, and a facsimile communication (FAX) function. The MFP may be also referred to as a multifunction peripheral apparatus, a scan print copy (SPC), or an all in One (AIO). Further, the present disclosure may be applied to apparatuses, or devices, such as a network camera, a video (television) conference terminal, a projector, etc., which do not include the display 3.

The first display information or the second display information is information identifying a type of a display. Meaning of "identify" may also include "specify" or "determine". In addition, the displays that are the same types are not required to be identified individually (for example, to identify each of the displays, each of which has the same model number, by using a product serial number is not required).

### Example Configuration

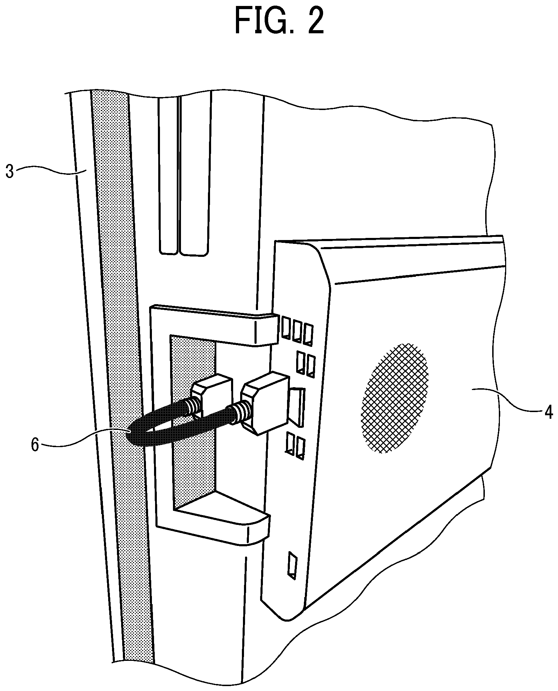

An example of connection between the information processing device 4 and the display 3 is described with reference to FIG. 2. FIG. 2 is an illustration of an example of an interface between the information processing device 4 and the display 3 connected by the cable 6, according to the present embodiment. In the example of FIG. 2, the information processing device 4 is attached to a back side of the display 3, which is a large type display. The information processing device 4 is attached in a manner that an interface of the information processing device 4 and an interface of the display 3 are close to each other, so that a length of the cable 6 is shorten.

There is no restriction on the interface as long as the information processing device 4 can acquire the connection display information. For example, the interface may be a high-definition multimedia interface (HDMI) (registered trademark), a digital visual interface-digital (DVI-D), a digital visual interface-integrated (DVI-I), a DisplayPort (registered trademark), a D-subminiature (D-sub), or a universal serial bus (USB) Type-C. In addition, the connection is not limited to a wired connection, and may be a wireless connection.

When the information processing device 4 and the display 3 are connected through a network, the cable 6 may be a local area network (LAN) cable.

The electronic whiteboard 2 is a device in which the information processing device 4 and the display 3 are connected to each other, however, the information processing device 4 is detachable to the display 3. Namely, the information processing device 4 and the display 3 are detachably connected to each other. When the information processing device 4 and the display 3 are used in combination as described above, the information processing device 4 and the display 3 are referred to as a system (for example, a displaying system).

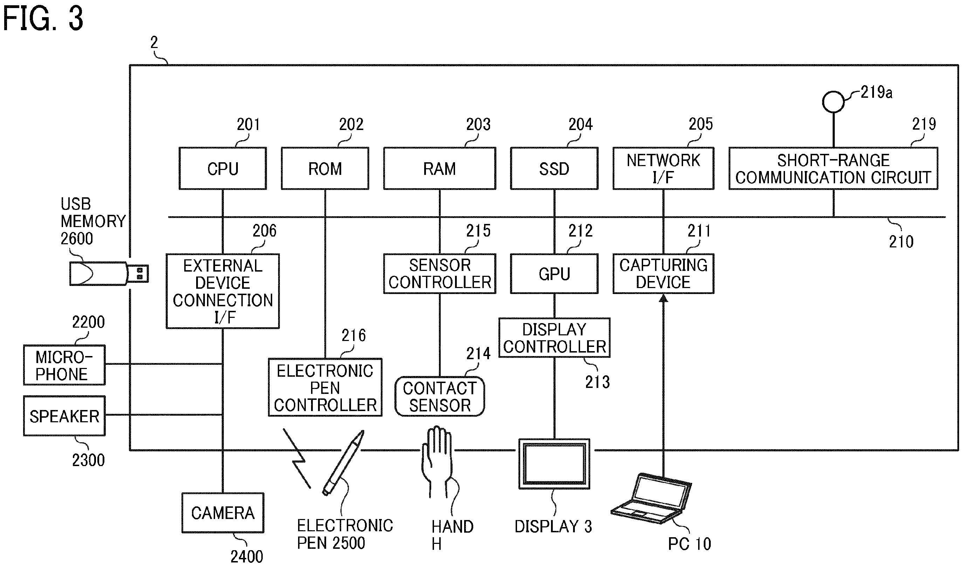

A description is now given of a hardware configuration of the electronic whiteboard 2, with reference to FIG. 3. FIG. 3 is a schematic block diagram illustrating a hardware configuration of the electronic whiteboard 2 according to the present embodiment. As illustrated in FIG. 3, the electronic whiteboard 2 includes a central processing unit (CPU) 201, a read only memory (ROM) 202, a random access memory (RAM) 203, a solid state drive (SSD) 204, a network interface (I/F) 205, and an external device connection interface (I/F) 206.

The CPU 201 controls the entire operation of the electronic whiteboard 2. The ROM 202 stores programs including an Initial Program Loader (IPL) to boot the CPU 201. The RAM 203 is used as a work area for the CPU 201. The SSD 204 stores various data such as a control program for the electronic whiteboard 2. The network I/F 205 controls communication with an external device through a communication network 100. The external device connection I/F 206 controls communication with a USB memory 2600, and external devices such as a camera 2400, a speaker 2300, a microphone 2200, etc.

The electronic whiteboard 2 further includes a capturing device 211, a graphics processing unit (GPU) 212, a display controller 213, a contact sensor 214, a sensor controller 215, an electronic pen controller 216, a short-range communication device 219, and an antenna 219a for the short-range communication device 219.

The capturing device 211 acquires screen information as a still image or a video image to be displayed on the display 3 by a PC 10. The GPU 212 is a semiconductor chip dedicated to graphics.

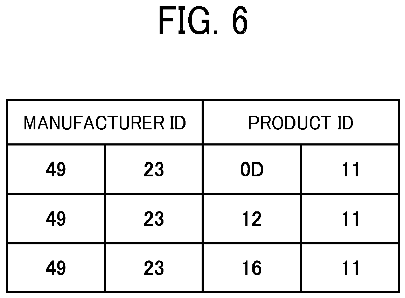

The display controller 213 controls and manages display of an image processed at the GPU 212 for outputting the image on the display 3 via the cable 6. Three lines that are a line for a data signal, a line for a clock signal, and a ground line are included in the cable 6, and communicate with each other in serial. In addition, a data format to be transmitted is standardized as the EDID. The EDID is a 128-byte binary file in which properties unique to the display 3 such as frequency, resolution, a vender name (vendor identifier (ID)), and a model (product ID) corresponding to the display 3 are described. A detailed description of the EDID is given later, with reference to FIG. 6 to FIG. 8.

The contact sensor 214 detects a touch made onto the display 3 with an electronic pen 2500 or a user's hand H. The sensor controller 215 controls the contact sensor 214. The contact sensor 214 inputs and senses a coordinate by using an infrared blocking system. More specifically, the display 3 is provided with two light receiving elements, which are disposed on both upper side ends of the display 3, and a reflector frame. The light receiving elements emit a plurality of infrared rays in parallel to a touch panel of the display 3. The light receiving elements receive lights passing in directions that are the same as optical paths of the emitted infrared rays, which are reflected by the reflector frame. The contact sensor 214 outputs an ID of the infrared ray that is blocked by an object after being emitted from the light receiving elements, to the sensor controller 215. Based on the ID of the infrared ray, the sensor controller 215 detects a specific coordinate that is touched by the object. The electronic pen controller 216 communicates with the electronic pen 2500 to detect a touch made by using the tip or bottom of the electronic pen 2500 to the display 3. The short-range communication device 219 is a communication circuit that communicates in compliance with a near field communication (NFC), a Bluetooth (registered trademark) or the like.

The electronic whiteboard 2 further includes a bus line 210. The bus line 210 is an address bus or a data bus that electrically connects the elements illustrated in FIG. 3, such as the CPU 201, to each other.

The contact sensor 214 is not limited to the infrared blocking system type, and may be a different type of detector, such as a capacitance touch panel that identifies a contact position by detecting a change in capacitance, a resistance film touch panel that identifies a contact position by detecting a change in voltage of two opposed resistance films, or an electromagnetic induction touch panel that identifies a contact position by detecting electromagnetic induction caused by contact of an object to a display. In addition, or in alternative to detecting a touch by the tip or bottom of the electronic pen 2500, the electronic pen controller 216 may also detect a touch by another part of the electronic pen 2500, such as a part held by a hand of the user.

### Regarding Functions

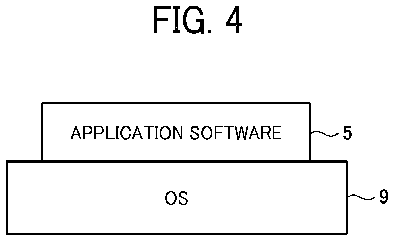

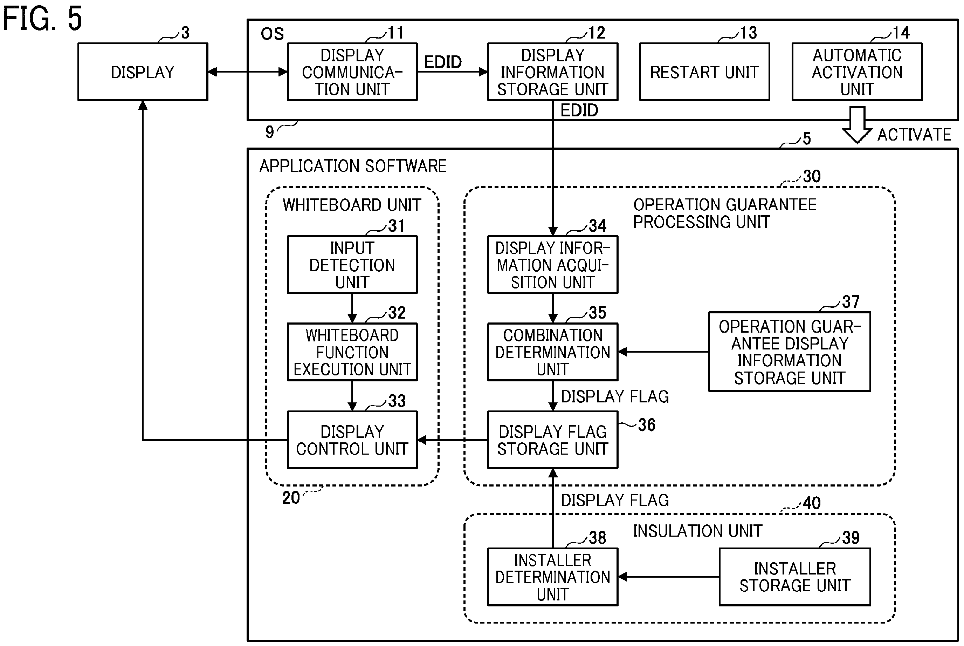

A description is now given of functions of the electronic whiteboard 2, with reference to FIG. 4 and FIG. 5. FIG. 4 is a diagram illustrating an example of a software configuration of the application software 5 and an OS 9, according to the present embodiment. The application software 5 according to the present embodiment has a general software configuration in which the application software 5 runs on the OS 9.

For example, Windows (registered trademark, which is, hereinafter, omitted) can be used as the OS 9. On Windows, the EDID can be acquired by a function called a display data channel (DDC). With the DDC, when a system (OS 9) is activated or when the display 3 is connected, the EDID is read out from the inside of the display 3 and stored in a registry. The application software 5 can read the EDID from the registry.

In addition, the application software 5 may make a system call at an arbitrary time and request Windows to acquire the EDID.

Windows is merely an example of the OS 9, and the OS 9 may be Linux (registered trademark), Android (registered trademark), iOS (registered trademark), Mac OS (registered trademark), or the like. In a case of each OS described above, the EDID may be acquired by a mechanism provided by the corresponding OS.

### Regarding OS

FIG. 5 is an example of a functional block diagram illustrating functions of the application software 5 and the OS 9 of the electronic whiteboard 2 according to the present embodiment. A description is now given of the OS 9. The OS 9 includes a display communication unit 11, a display information storage unit 12, a restart unit 13, and an automatic activation unit 14.

The automatic activation unit 14 activates the application software 5, which is set in advance. In the present embodiment, the application software 5 that provides the functions of the electronic whiteboard 2 is automatically activated. To "automatically activate" indicates to activate the application software 5 without a user operation at a time when the OS 9 completes the start-up (at a time when preparation for activating the application software 5 is completed). The automatic activation unit 14 registers a file path to an execution file of the application software 5, for example.

The display communication unit 11 acquires, as described above, at the time of activating the OS 9 or connecting to the display 3 by using the DDC function, the EDID from the display 3 and causes the display information storage unit 12 to retain (store) the acquired EDID. The display information storage unit 12 stores, or retains, the EDID. The display information storage unit 12 corresponds to a registry, for example. There is an opinion that the registry is not strictly included in the OS 9. However, here, the display information storage unit 12 is simply required to be available to the application software 5 for acquisition. For example, the registry may be on a server or a network, or may be in an external memory such as the USB memory 2600 or the like.

The restart unit 13 restarts the OS 9. The electronic whiteboard 2 cannot be used unless the OS 9 starts. Accordingly, to restart the OS 9 means also to start, or activate, the electronic whiteboard 2. The term of "restart" used as above is also replaceable with "reboot", for example. A process of restarting may be substantially the same as the process of starting. For example, the process includes initializing hardware such as the CPU 201, expanding the OS 9 and the application software 5 in the RAM 203, and executing processing in order of addresses.

### Regarding Application Software

A description is now given of the application software 5. The application software 5 includes a whiteboard unit 20, an operation guarantee processing unit 30, and an installation unit 40. Note that the functions not necessary for describing the present embodiment are omitted here.

The whiteboard unit 20 includes an input detection unit 31, a whiteboard function execution unit 32, and a display control unit 33. The input detection unit 31 detects an input received according to a user operation via the touch panel. For example, the input detection unit 31 detects a coordinate of a position touched by the user, determines whether the position is touched by the user's hand H or the electronic pen 2500, and transmits information on (content of) the detection to the whiteboard function execution unit 32.

The whiteboard function execution unit 32 executes the entire function as a whiteboard. For example, the whiteboard function execution unit 32 executes drawing, deleting, or moving of a handwritten stroke, executes gesture operation (enlargement, reduction, page switching), or executes wide range deletion by a palm of the user's hand, based on the information on the detection received from the input detection unit 31.

The display control unit 33 displays or deletes the handwritten stroke generated on the display 3 by the whiteboard function execution unit 32. In addition, the display control unit 33 displays, on the display 3, a warning screen indicating that the operation is not guaranteed due to a determination of a combination determination unit 35 (which is described later). The display control unit 33 further displays, on the display 3, a message screen indicating that there is an installer generated by an installer determination unit 38 (which is described later). In addition, the display control unit 33 controls a screen transition, and causes a screen to change according to a user operation.

The operation guarantee processing unit 30 includes a display information acquisition unit 34, the combination determination unit 35, a display flag storage unit 36, and an operation guarantee display information storage unit 37.

The display information acquisition unit 34 acquires, from the display information storage unit 12, connection display information that can identify a model of the display 3, which is currently, or being, connected to the information processing device 4, and transmits the connection display information to the combination determination unit 35. As described above, the EDID is used as an example of the connection display information.

The combination determination unit 35 compares the connection display information and the operation guarantee display information stored in the operation guarantee display information storage unit 37, and determines whether the operation of a combination of the application software 5, which is currently executed, and the display 3 is guaranteed or not. When determining that the operation is not guaranteed, the combination determination unit 35 turns on a display flag for the warning screen in the display flag storage unit 36.

The operation guarantee display information storage unit 37 stores the operation guarantee display information. The operation guarantee display information is information on one or more display types with which the operation of is guaranteed by the application software 5. An example of the operation guarantee display information is illustrated in FIG. 6.

The display flag storage unit 36 manages, by using a flag, whether there is information to be displayed by the display control unit 33. For example, when the combination determination unit 35 determines that the operation is not guaranteed, a display flag for displaying the warning screen is turned on. In addition, when there is an installer, a display flag for a message screen is turned on. Accordingly, the display control unit 33 determines to display the warning screen or the message screen.

The installation unit 40 includes the installer determination unit 38 and an installer storage unit 39. The installer determination unit 38 determines whether the installer storage unit 39 stores an installer for the application software 5. The installer is defined as a computer program that installs, or introduces, onto the information processing device 4, software to be executed. The installer is provided as an executable file or the like attached to a software package, and when being executed, copies files, configuration files, or the like of the application software 5 to a predetermined folder of the SSD 204 of the information processing device 4. In addition, the installer rewrites a part of system settings such as a registry as necessary. For example, the installer storage unit 39 is a predetermined folder (for example, C: ¥WB¥install¥). When the installer is stored (retained), the installer determination unit 38 determines that new application software 5 can be installed (installable). Namely the application software 5 can be newly installed (installable). When determining that the installer is stored, the installer determination unit 38 turns on a display flag for a message screen 310, which is described later, in the display flag storage unit 36.

Note that the electronic whiteboard 2 acquires (downloads) the installer from a server for program distribution through a network at a predetermined time. The predetermined time and an internet protocol (IP) address of the server for program distribution are set, as setting information, in the electronic whiteboard 2 by the user or the like. The predetermined time is, for example, at a time of activating or terminating (deactivating) the electronic whiteboard 2, a fixed time, a time when a load is low, or the like. In addition to be automatically downloaded by the electronic whiteboard 2, the installer may be stored in the installer storage unit 39 by an administrator or the like after the administrator or the like attach a storage medium such as the USB memory 2600 that stores the new application software 5, to the electronic whiteboard 2.

### Example of Operation Guarantee Display Information

FIG. 6 is an illustration of an example of the operation guarantee display information stored in the operation guarantee display information storage unit 37, according to the present embodiment. In FIG. 6, three pieces of EDID are illustrated as operation guarantee display information. Note that "manufacturer ID" and "product ID" are described for explanation, but "manufacturer ID" and "product ID" do not need to be described in the operation guarantee display information storage unit 37.

The EDID stored in the display 3 is 128 bytes and "manufacturer ID" and "product ID" are a part of the 128-byte EDID. However, in the present embodiment, "manufacturer ID" and "product ID" may be referred to as the EDID in order to simplify the explanation.

The 128-byte EDID is acquired by the DDC as described above. The DDC is an abbreviation of video electronics standards association (VESA) DDC and is a standard for serial communication to communicate bidirectionally between the display 3 and a graphic board (i.e., the display controller 213 in FIG. 3) of the information processing device 4.

By the VESA DDC, a list of standards (frequency, resolution, etc.) capable of being received from the graphic board and capable of being displayed on the display 3 is transmitted, and normal (appropriate) images and sounds are automatically selected. Alternatively, it is possible to prevent the graphic board from transmitting a signal having a standard that is not supported.

On Windows, the EDID acquired from the display 3 that has been connected once, is stored as binary data in the registry.

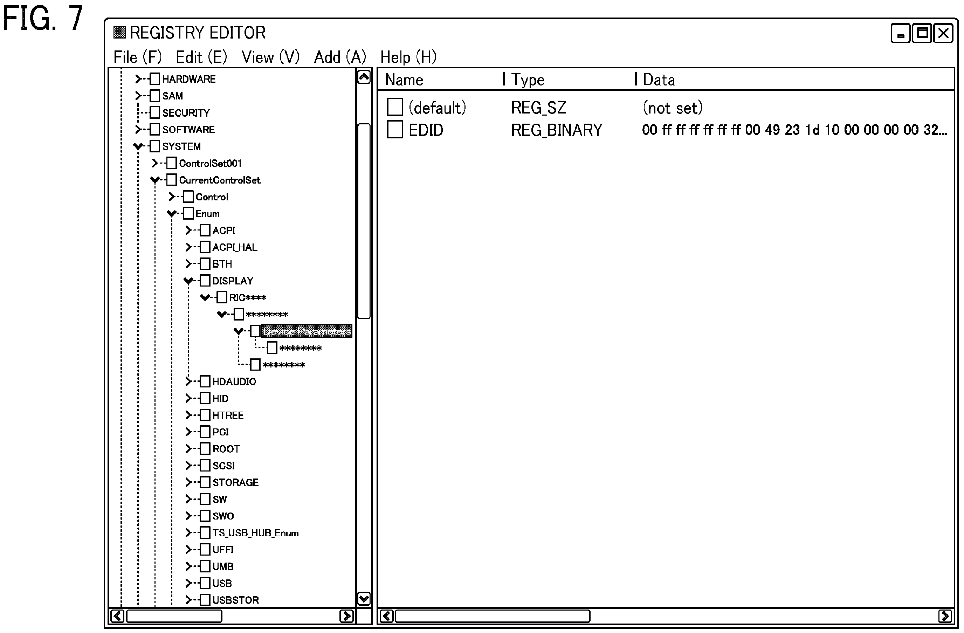

FIG. 7 is an illustration of an example of the 128-byte EDID stored in a registry editor, according to the present embodiment. Out of 128 bytes, "manufacturer ID" and "product ID" are determined in advance to be at the following positions according to an EDID standard. The manufacturer ID has three letters. That is, "manufacturer ID" and "product ID" are from byte 8 to byte 11 that are 4 of 128 bytes of EDID.
- The first letter of the manufacturer ID (bit 6 to bit 2 in byte 8)
- The second letter of the manufacturer ID (bit 1 in byte 8 to bit 5 in byte 9)
- The third letter of the manufacturer ID (bit 4 to bit 0 in byte 9)
- Manufacturer product ID (the numbers of byte 10 and byte 11, which is 16 bits)

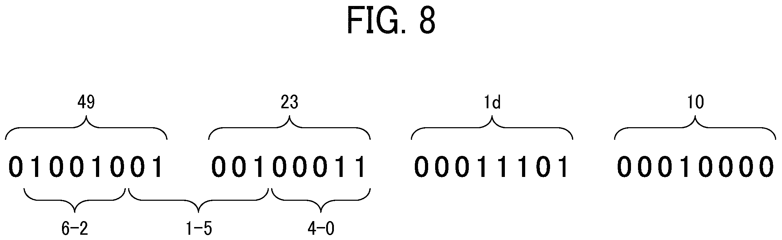

In the example of FIG. 7, byte 8 and byte 9 correspond to "49" and "23", respectively, and byte 10 and byte 11 correspond to "Id" and 10", respectively. A method of acquiring "manufacturer ID" and "product ID" from byte 8 to byte 11 is described with reference to FIG. 8. FIG. 8 is an illustration of byte 8 to byte 11 of the EDID represented in the binary digit, according to the present embodiment.

Since the manufacturer ID is represented by 5-bit character strings, the 5-bit character strings acquired from the positions of "manufacturer ID" and "product ID", which are determined by the EDID standard among 128 bytes, are "10010", "01001", and "00011". These character strings correspond to three letters representing the manufacturer. In addition, an arrangement of 5 bits in a 5-bit character string corresponds to a letter, as described below.
00001 = A
00002 = B
:
11010 = Z

Accordingly, each of "10010", "01001", and "00011" is converted into the corresponding letter from such a correspondence table described above, and the manufacturer is identified by the three letters. As for the product ID, byte 10 and byte 11 may be regarded as numbers.

In the description of the present embodiment, the application software 5 reads the EDID from the registry. However, where the EDID is stored may varies depending on the OS 9. For example, the EDID may be stored in a folder or a predetermined file of a directory. In this case, the application software 5 may read the EDID from the folder or the file of the directory where the OS 9 stores the EDID. Alternatively, the application software 5 may directly read the EDID from the display 3.

In the description of the present embodiment, the EDID of the display 3 is set as the information indicating the type of the display 3. However, the embodiments are not limited thereto, and any information indicating a type of display (display type) may be used, as long as the information includes the type of the display 3. For example, a manufacturer of the electronic whiteboard 2 mounts an integrated circuit (IC) dedicated to the electronic whiteboard 2 in the display 3, and information on the type of the display 3 is stored in the IC, in advance. The application software 5 of the electronic whiteboard 2 acquires the information stored in the IC. The IC, which is mounted in the display 3 and stores the information on the type of the display 3, means that the display 3 is guaranteed by the manufacturer. Accordingly, the application software 5 can guarantee the operation more reliably.

### Operation Process

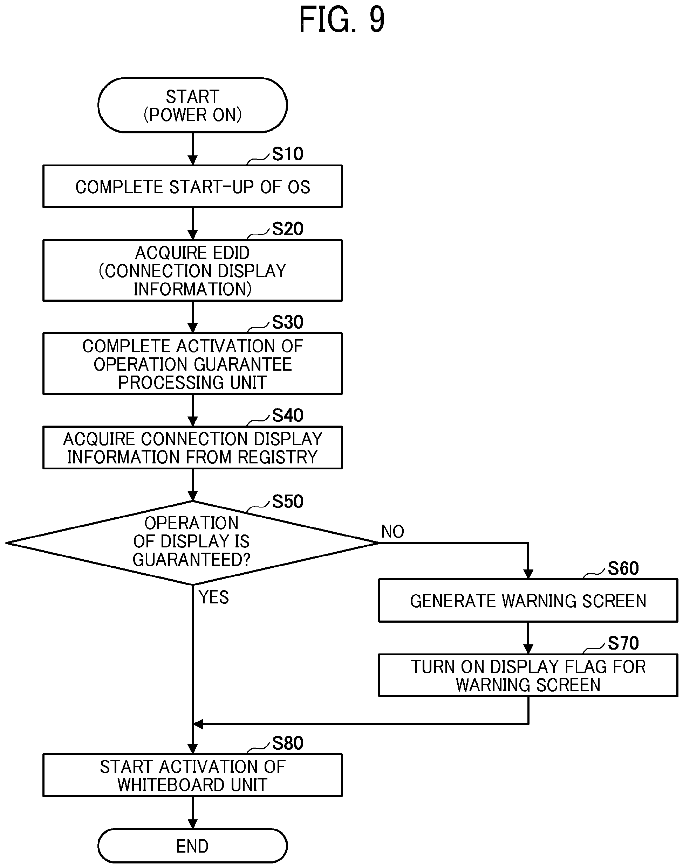

A description is now given of operation of the electronic whiteboard 2, with reference to FIG. 9 to FIG. 11.

### Process of Determining Whether Operation of Display is Guaranteed

FIG. 9 is a flowchart illustrating an example of a process in which the operation guarantee processing unit 30 of the electronic whiteboard 2 determines whether the operation of the display 3 connected to the information processing device 4 is guaranteed by an application, according to the present embodiment. The process illustrated in FIG. 9 starts when the power supply of the electronic whiteboard 2 is turned on or the OS 9 is restarted.

Start-up (activation) of the OS 9 is started in response to the power on of the electronic whiteboard 2 or when the OS 9 is restarted. The start-up of the OS 9 is completed after a certain time has elapsed from when the start-up of the OS is started (S10).

Upon completion of the start-up of the OS 9, the display controller 213 acquires the EDID from the display 3 via the cable 6 using the DDC (S20). In other words, the display communication unit 11 acquires the EDID from the display 3. The EDID is the connection display information. The display controller 213 stores the EDID in a registry. In other words, the display communication unit 11 causes the display information storage unit 12 to store the connection display information, which is acquired.

When the start-up of the OS 9 is completed, the automatic activation unit 14 starts activating the application software 5. In the application software 5, the operation guarantee processing unit 30 and the installation unit 40 are designed to complete the activation earlier than the whiteboard unit 20 (S30). In other words, the operation guarantee processing unit 30 and the installation unit 40 starts the activation before the whiteboard unit 20 does so.

Upon completion of the activation of the operation guarantee processing unit 30, the display information acquisition unit 34 acquires the connection display information from the display information storage unit 12 (e.g., the registry) (S40). In addition, the display information acquisition unit 34 extracts the manufacturer ID and the product ID from the connection display information (EDID) as described in FIG. 7 and FIG. 8.

Subsequently, the combination determination unit 35 determines whether the operation of the display 3 is guaranteed by the application software 5 (S50). The combination determination unit 35 checks, or compares, the operation guarantee display information stored in the operation guarantee display information storage unit 37 and the connection display information, and when the operation guarantee display information includes the connection display information, determines that the operation of the display 3 is guaranteed by the application software 5. Otherwise, the combination determination unit 35 determines that the display 3 of which the operation is guaranteed by the application software 5 is not connected (namely determines that the display 3 that is not guaranteed by the application software 5 is connected).

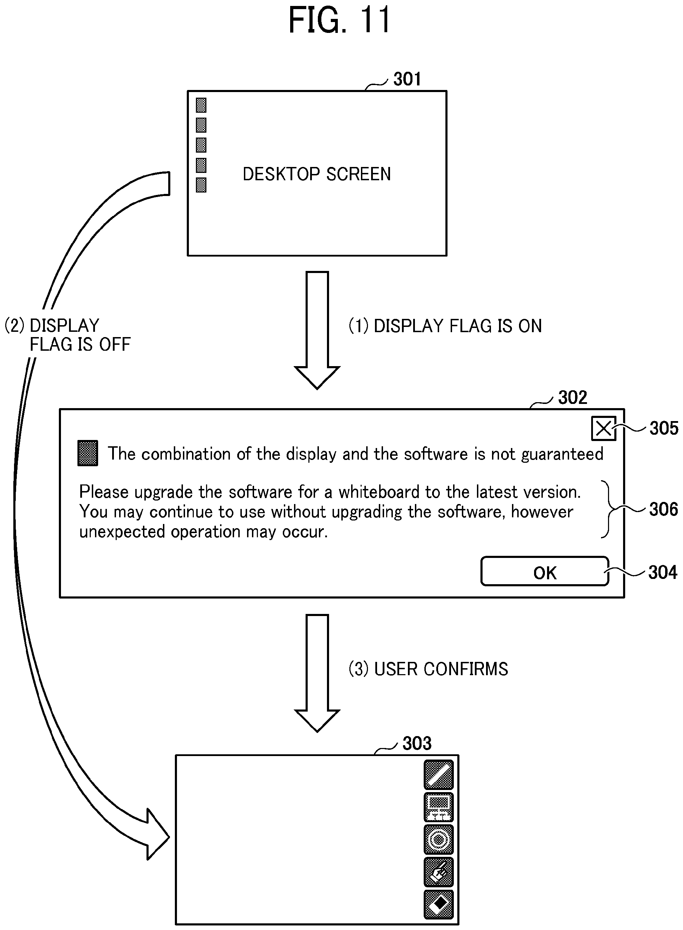

When a result of the determination in S50 is No, the combination determination unit 35 generates a warning screen (S60). For example, a dialog that is used for warning by the OS 9 can be used by calling the OS 9. Predetermined text data is used to be displayed on the warning screen. An example of the warning screen is illustrated in FIG. 11.

Then, the combination determination unit 35 sets a display flag for the warning screen to ON in the display flag storage unit 36 (S70). In addition, information used for displaying the warning screen is associated with the display flag.

When a result of the determination in S50 is Yes, or subsequent to S70, activation of the whiteboard unit 20 is started (S80).

In the example of FIG. 9, the flowchart seems to be described in chronological order, however, the disclosure is not limited thereto. For example, starting the activation of the whiteboard unit 20 can be any time after S30. However, in the present embodiment, when the result of the determination indicates that the display 3 of which the operation is not guaranteed by the application software 5 is connected, the display 3 preferably displays a message indicating that the display 3 of which the operation is not guaranteed is connected, before the user starts using a function of as a whiteboard. Accordingly, a time to activate the operation guarantee processing unit 30 and the whiteboard unit 20 is adjusted so that the determination whether the operation of the display 3 is guaranteed or not is completed before the completion of the activation of the whiteboard unit 20. That is, the operation guarantee processing unit 30 completes the activation earlier than the whiteboard unit 20. The same situation applies to between the installation unit 40 and the whiteboard unit 20.

The system administrator can remotely operate to start or shut down the electronic whiteboard 2, and there may be a case where the user is not in front of the display 3, and the warning screen is kept being displayed. In such a case, the administrator can close the warning screen and shuts down.

### Process of Displaying Warning Screen

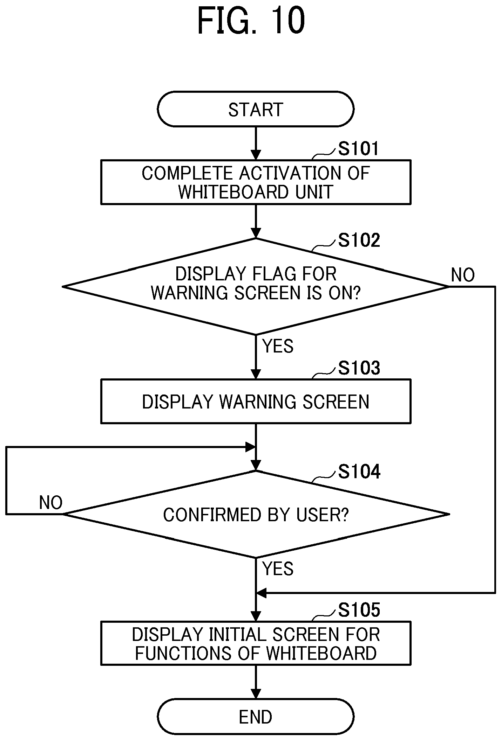

A description is now given of a process of displaying a warning screen using a display flag for the warning screen, with reference to FIG. 10 and FIG. 11. FIG. 10 is a flowchart illustrating an example of a process in which the electronic whiteboard 2 displays a warning screen 302 based on a display flag, according to the present embodiment. The process illustrated in FIG. 10 is performed subsequent to the process illustrated in FIG. 9. FIG. 11 is an illustration of a screen transition corresponding to the flowchart illustrated in FIG. 10, according to the present embodiment.

First, the activation of the whiteboard unit 20 is completed (S101). When the activation is completed, the display control unit 33 of the whiteboard unit 20 determines whether a display flag for the warning screen 302 stored by the display flag storage unit 36 is ON or not (SI02).

When a result of the determination in S102 is Yes, the display control unit 33 displays the warning screen 302, which is associated with the display flag, on the display 3 (SI03). As illustrated in FIG. 11, the warning screen 302 includes a confirmation button 304 for receiving a user input for confirmation, and the user presses the confirmation button 304. Alternatively, the user may press a close button 305.

The whiteboard function execution unit 32 determines whether the input detection unit 31 detects pressing of the confirmation button 304 or not (S104). The warning screen 302 is kept being displayed until the pressing of the confirmation button 304 is detected.

When a result of the determination in S102 is No or when the pressing of the confirmation button 304 is detected (Yes in SI04), the display control unit 33 displays an initial screen (top screen) 303 for use of the functions of a whiteboard (S105).

As described above, the warning screen 302 is kept being displayed until the pressing of the confirmation button 304 is detected. This allows the user to surely confirm that the display 3 of which the operation is not guaranteed by the application software 5 is connected. In other words, the user cannot use the functions of the whiteboard unless the user confirms that the display 3 of which the operation is not guaranteed by the application software 5 is connected.

Referring now to FIG. 11, a desktop screen 301 is displayed on the display 3 immediately after the start-up of the OS 9. However, in a case where a screen immediately transitions from the desktop screen 301 to a screen indicating the activation of the application software 5, there may not be a clear phase in which the desktop screen 301 is displayed. Then, the operation guarantee processing unit 30 is activated, and the display flag is set to ON. Then, the activation of the whiteboard unit 20 is completed.
(1) When the display flag is ON, the display control unit 33 displays the warning screen 302, and the desktop screen 301 transitions to the warning screen 302.
(2) When the display flag is OFF, the display control unit 33 does not display the warning screen 302, and the desktop screen 301 transitions to the initial screen 303 in response to the completion of the activation of the whiteboard unit 20. As a result, the user can use the electronic whiteboard 2.
(3) When the confirmation button 304 is pressed on the warning screen 302, the warning screen 302 transitions to the initial screen 303, which is for use of the functions of the whiteboard. As a result, the user can use the electronic whiteboard 2.

The warning screen 302 displays a message 306, which is "The combination of the display and the software is not guaranteed. Please upgrade the software for a whiteboard to the latest version. You may continue to use without upgrading the software, however unexpected operation may occur." The warning screen 302 also displays the confirmation button 304 and the close button 305. The confirmation button 304 and the close button 305 have the same function of accepting that the user confirms the message 306.

In the manner described above, the electronic whiteboard 2 according to the present embodiment can notify the user of that the display 3 of which the operation is not guaranteed by the application software 5 is connected before the user starts using the whiteboard.

### Installation of Application Software

The electronic whiteboard 2 has a mechanism to assist installation of the application software 5 so that the user can install the application software 5 with a low workload. To "install" means to introduce the application software 5 so that the application software 5 becomes executable on the electronic whiteboard 2. When the application software 5 is already installed on the electronic whiteboard 2, expression of "update", "upgrade", or the like may be used instead of "install".

If the application software 5 installed is the latest version, there is a high possibility that the display 3 of which the operation is not guaranteed by the application software 5 is not connected. Therefore, it is preferable to urge the user to install, or update, the application software 5 prior to displaying the warning screen 302.

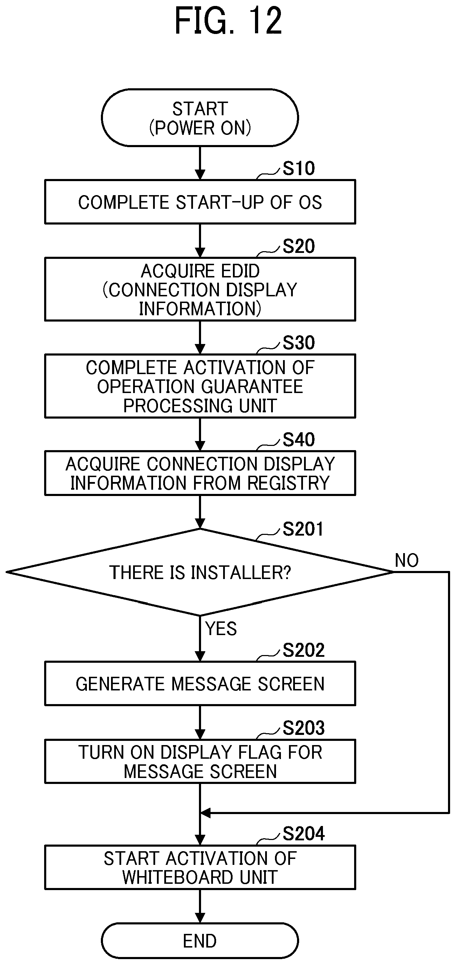

A description is now given of the installation of the application software 5, with reference to FIG. 12 to FIG. 14.

### Process of Determining Whether There is Installer

FIG. 12 is a flowchart illustrating an example of a process in which the installer determination unit 38 of the electronic whiteboard 2 determines whether an installer is stored or not, according to the present embodiment. The process illustrated in FIG. 12 starts when the power supply of the electronic whiteboard 2 is turned on. The installation unit 40 completes the activation prior to the whiteboard unit 20. Any of the operation guarantee processing unit 30 and the installation unit 40 may complete the activation first, as long as the completion of the activation of both of them is prior to the completion of the activation of the whiteboard unit 20. Therefore, the process illustrated in FIG. 12 is performed in parallel with FIG. 9, before FIG. 9, or after FIG. 9.

Processing of S10 to S40, which is performed when the power supply of the electronic whiteboard 2 is turned on, is the same as that of FIG. 9, and a redundant description is omitted.

When the activation of the installation unit 40 is completed, the installer determination unit 38 determines whether there is an installer in the installer storage unit 39 (S201). The installer is deleted after installing the application software 5. Accordingly, when there is the installer in the installer storage unit 39, the installer determination unit 38 determines that there is the latest application software 5 to be installed. That is there is the latest version of the application software 5 that is installable.

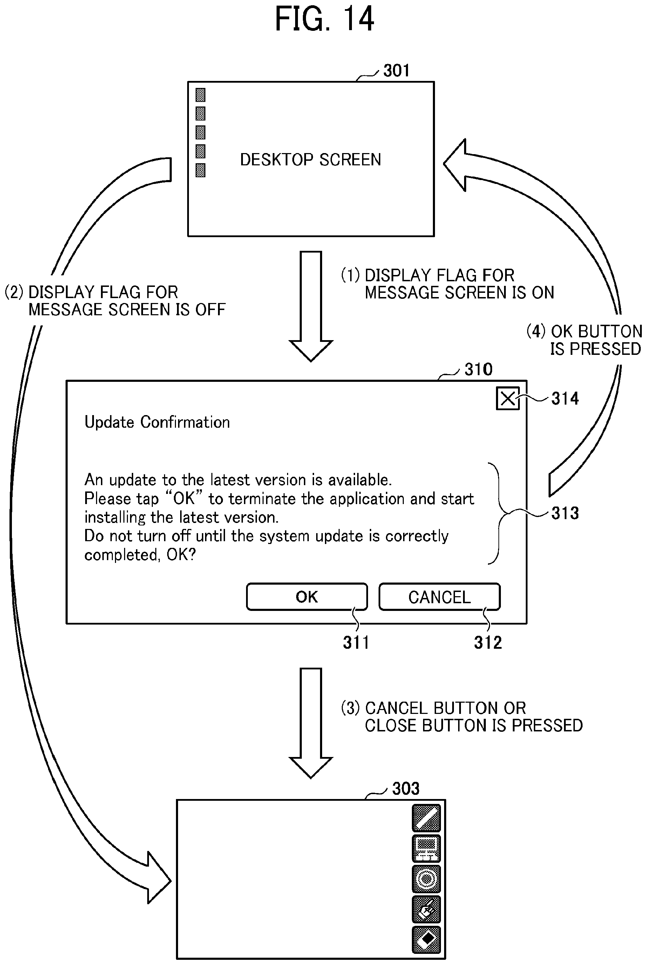

When a result of the determination in S201 is Yes, the installer determination unit 38 generates the message screen 310 (S202). For example, a dialog that is used for displaying a message by the OS 9 can be used by calling the OS 9. Predetermined text data is used to be displayed on the message screen 310. An example of the message screen 310 is illustrated in FIG. 14.

Subsequently, the installer determination unit 38 sets a display flag for the message screen 310 to ON in the display flag storage unit 36 (S203). In addition, information used for displaying the message screen 310 is associated with the display flag.

When a result of the determination in S201 is No or subsequent to S203, the activation of the whiteboard unit 20 is started (S204).

### Installation

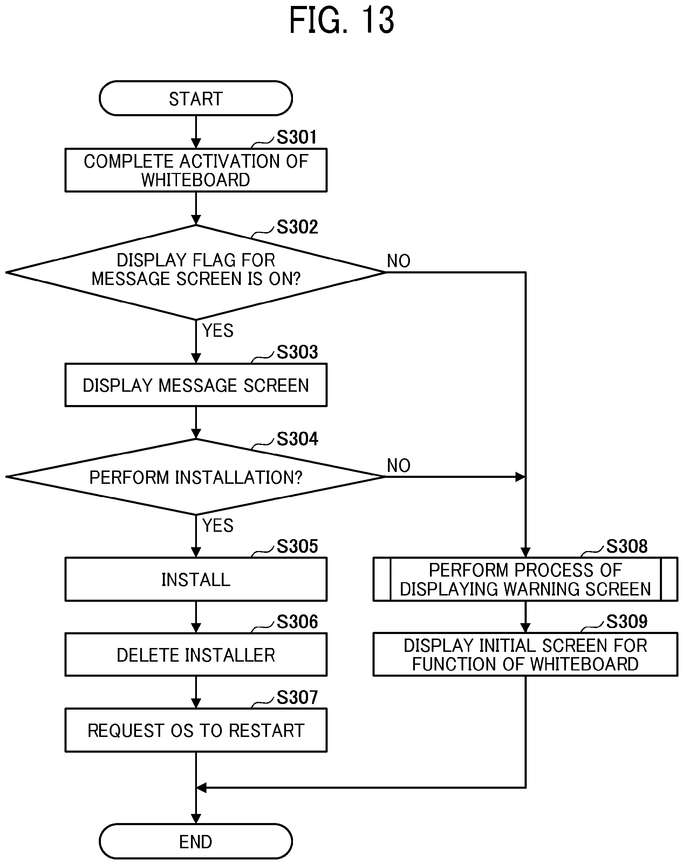

A description is now given of a process of displaying a message screen and performing the installation, with reference to FIG. 13 and FIG. 14. FIG. 13 is a flowchart illustrating an example of a process in which the electronic whiteboard 2 displays a message screen based on a display flag and performs installation, according to the present embodiment. The process illustrated in FIG. 13 is performed subsequent to the process illustrated in FIG. 12. FIG. 14 is an illustration of a screen transition corresponding to the flowchart illustrated in FIG. 13, according to the present embodiment.

First, the activation of the whiteboard unit 20 is completed (S301). When the activation is completed, the display control unit 33 of the whiteboard unit 20 determines whether the display flag for the message screen 310 stored by the display flag storage unit 36 is ON or not (S302).

When a result of the determination in S302 is Yes, the display control unit 33 displays the message screen 310, which is associated with the display flag, on the display 3 (S303). As illustrated in FIG. 13, the message screen 310 includes an OK button 311, a cancel button 312, and a close button 314 that are for a user input indicating whether to perform installation or not, and the user is to press one of the buttons.

The whiteboard function execution unit 32 determines whether the input detection unit 31 detects pressing of the OK button 311 or not (S304).

When the cancel button 312 or the close button 314 is pressed (No in S304), the process illustrated in FIG. 10 (process of displaying the warning screen 302) is performed (S308). That is, when it is determined that the display 3 of which the operation is not guaranteed by the application software 5 is connected at a time of the activation of the application software 5, the warning screen 302 is displayed.

When the OK button 311 is pressed (Yes in S304), the whiteboard function execution unit 32 requests the OS 9 to execute the installer, so that the installation is performed (S305).

When the installer completes the installation, the installer in the installer storage unit 39 is deleted (S306). Since the installer is executed in the RAM 203, it is possible to delete the installer from the SSD 204.

In addition, when the installer completes the installation, the installer requests the OS 9 to restart (S307). Restarting the OS 9 is described in the installer. For restarting the OS 9, the installer may launch the restart unit 13 of the OS 9.

After the restarting, the process illustrated in FIG. 13 is completed. When the restart unit 13 restarts the OS 9, the processing same as the processing of the power on is performed. That is, although the process of FIG. 12 is performed, the installer has been already deleted, and the display flag for the message screen 310 is turned OFF. Accordingly, when the process of FIG. 13 is performed again, and the determination in S302 indicates No.

When a result of the determination in S302 is No, the display control unit 33 performs the process of displaying the warning screen 302, which is described with reference to FIG. 10 (S308). Thus, when the display flag for the warning screen 302 is ON, the warning screen 302 is displayed.

After displaying the warning screen 302 or without displaying the warning screen 302, the display control unit 33 displays the initial screen 303 for the functions of the whiteboard (S309).

A description is now given of a case where the restart is performed in S307. When the same processing as the power on is performed due to the restart, the process of FIG. 9 is also performed again. Because new application software has been installed, it is highly expected to be determined that the display 3 of which the operation is guaranteed by the application software 5 is connected. That is, when the installer is executed, since the application software 5 has been upgraded to the latest version, it can be considered that it is unlikely to be determined that the display 3 of which the operation is not guaranteed by the application software 5 is connected. Accordingly, the display flag for the warning screen 302 is also turned OFF. Therefore, the warning screen 302, which is unnecessary, is not be displayed after the restart when the new application software is installed. That is, when the new application software 5 is activated in response to restart of the electronic whiteboard 2 and the combination determination unit 35 determines that the operation of the display 3 being connected to the information processing device 4, is guaranteed, the display control unit 33 displays the initial screen 303, without displaying the warning screen 302.

In the way described above, by displaying the message screen 310 before the warning screen 302, it is possible to prevent the user from being confused by the warning screen 302 displayed. Alternatively, the message screen 310 may be displayed after the warning screen 302, and in such a case, the user can perform the installation after considering the need of the installation.

Which one of the message screen 310 and the warning screen 302 is displayed first depends on which one of the display flag for the message screen 310 and the display flag for the warning screen 302 has a higher priority. The priority among a plurality of display flags in the display flag storage unit 36 is set in advance, in the display control unit 33.

Referring now to FIG. 14, the desktop screen 301 is displayed on the display 3 immediately after the start-up of the OS 9. Then, the installation unit 40 is activated, and the display flag for the message screen 310 is set to ON, and then the activation of the whiteboard unit 20 is completed.
(1) When the message flag for the message screen 310 is ON, the display control unit 33 displays the message screen 310, so that the desktop screen 301 transitions to the message screen 310.
(2) When the display flag for the message screen 310 is OFF, the display control unit 33 does not display the message screen 310, so that the desktop screen 301 transitions to the initial screen 303 in response to the completion of the activation of the whiteboard unit 20. Note that there is a case where the warning screen 302 is displayed, as described above with reference to FIG. 11.
(3) When the cancel button 312 or the close button 314 is pressed on the message screen 310, the message screen 310 transitions to the initial screen 303 for the functions of the whiteboard. Note that there is a case where the warning screen 302 is displayed, as described above with reference to FIG. 11.
   The message screen 310 displays a massage 313 of "An update to the latest version is available. Please tap "OK" to terminate the application and start installing the latest version. Do not turn off the power supply until the system update is correctly completed, OK?". The message screen 310 also displays the OK button 311, the cancel button 312, and the close button 314. The OK button 311 is pressed to start the installation, and the cancel button 312 or the close button 314 is pressed not to start the installation.
(4) When the OK button 311 is pressed on the message screen 310, the message screen 310 transitions to the desktop screen 301 after the installation is performed.

As described above, the electronic whiteboard 2 according to the present embodiment can assist the installation of the application software 5. Even when it is determined that the display 3 of which the operation is not guaranteed by the application software 5 is connected, it is possible to reduce situations in which the user recognizes that the display 3 of which the operation is not guaranteed by the application software 5 is connected.

### Installation Performed by User (Installation Not Automatically Performed)

There may be a case in which an installer is not stored in the installer storage unit 39, but the user desires to install the application software 5. Such a case can occur when the electronic whiteboard 2 fails to download the installer from a program distribution server, for example. In preparation for such a case, installation of the application software 5 manually performed by the user is supported by the electronic whiteboard 2. Here, "the installation is manually performed by the user" means "the installation is performed, but not performed automatically".

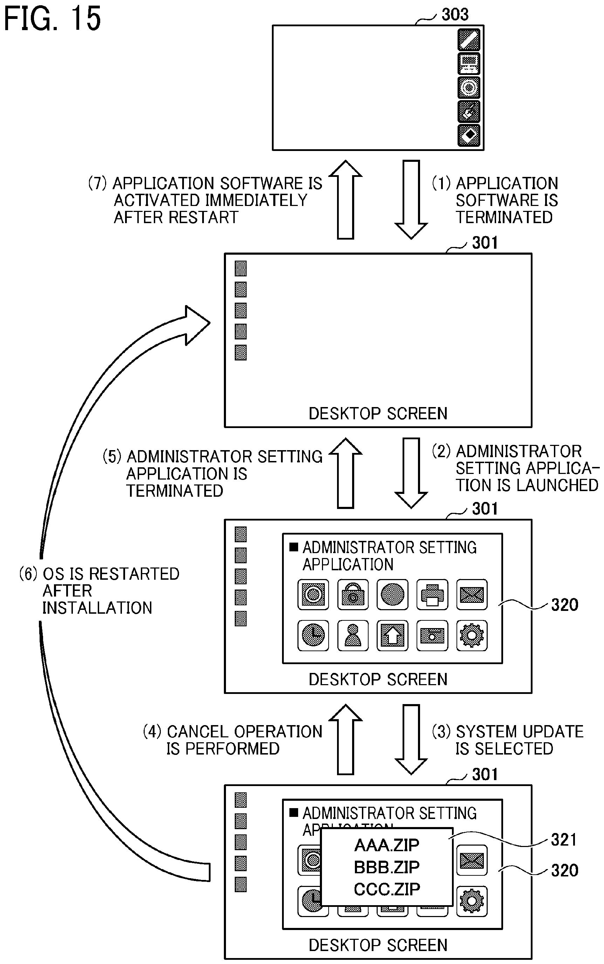

FIG. 15 is an illustration for describing the installation of the application software 5 manually performed by the user, according to the present embodiment. FIG. 15 illustrates a screen transition in the installation of the application software 5 manually performed by the user.
(1) The whiteboard unit 20 is activated, and the initial screen 303 for the functions of the whiteboard is displayed. To install the application software 5, the user terminates (closes) the application software 5. As a result, the initial screen 303 transitions to the desktop screen 301.
(2) The user launches an administrator setting application. The administrator setting application is an application for various settings for the electronic whiteboard 2. Accordingly, an administrator setting application window 320 is displayed on the desktop screen 301.
(3) The user selects "system update" on the administrator setting application window 320. The "system update" is a function for performing the installation of the application software 5. Note that the user inserts the USB memory 2600 in which the installer is stored into the electronic whiteboard 2 at any time up to (3) in the steps of FIG. 15. As a result, the system update function detects the installer from the USB memory 2600. An installer list 321 is displayed as, a pop-up window, on the administrator setting application window 320. Note that the installer includes several files, which are provided as an archive files. The system update function identifies a setting file or meta data from the archive file of the USB memory 2600 based on a file name or the like and displays, in the installer list 321, which is displayed as the pop-up window, all the archive files of which the setting file or meta data is described as the installer for the application software 5 of the electronic whiteboard 2.
(4) When the user performs a cancel operation in relation to the installer list 321, the installer list 321 disappears, and the administrator setting application window 320 is displayed.
(5) When the user terminates (closes) the administrator setting application on the administrator setting application window 320, the administrator setting application window 320 disappears and the desktop screen 301 is displayed.
(6) When the user selects an installer from the installer list 321 and performs the installation, the OS 9 is restarted, and the screen changes to the desktop screen 301.
(7) The desktop screen 301 transitions to the initial screen 303 for the functions of the whiteboard.

As described above, the installation of the application software 5 manually performed by the user is supported by the electronic whiteboard 2. Even when it is determined that the display 3 of which the operation is not guaranteed by the application software 5 is connected, the user can manually install the application software 5 and execute the application software 5 that guarantees the operation of the display 3.

### Example Modification of Operation Guarantee Display Information

In the present embodiment, whether the connection display information is registered in the operation guarantee display information possessed by the application software 5 or not is determined. That is, the application software 5 is required to retain at least the operation guarantee display information corresponding to its own (current) version.

In addition, operation guarantee display information that can be commonly used for a plurality of versions of application software 5 may be prepared.

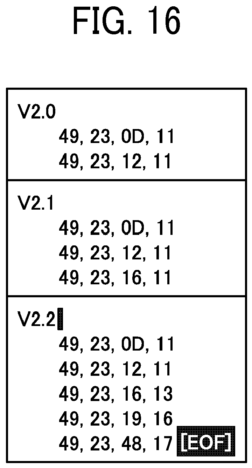

FIG. 16 is an illustration of operation guarantee display information that can be commonly used for the plurality of versions of the application software 5, according to the present embodiment. In the operation guarantee display information of FIG. 16, the EDID of the display 3 of which the operation is guaranteed by the application software 5 is set for each of the versions of V2.0, V2.1, and V2.2. In such the operation guarantee display information as described above, the application software 5 retains its own version, and determines whether the connection display information is included in the EDID associated with the own version or not. In general, the application software 5 retains its own version.

### Operation Non-Guaranteed Display Information

The operation guarantee display information described in the present embodiment is, in other words, a white list in which the EDID for guaranteeing the operation by the application software 5 is set. On the other hand, whether the display 3 of which the operation is guaranteed by the application software 5 is connected or not may be determined based on a black list. In this case, when the EDID of the black list and the EDID of the connection display information are different from each other, the combination determination unit 35 determines that the operation of the display 3 is guaranteed by the application software 5.

When the number of displays 3 of which the operation is guaranteed is small, preparing the EDID of the white list can reduce the workload for preparing operation non-guaranteed display information. On the other hand, when the number of displays 3 of which the operation is guaranteed is large, preparing the EDID of the black list can reduce the workload.

In addition, both the EDID that guarantees the operation (white list) and the EDID that does not guarantee the operation (black list) may be prepared. When the EDID of the connection display information is registered in the white list and is not registered in the black list, the combination determination unit 35 determines that the operation of the display 3 is guaranteed by the application software 5, resulting in strictness in the determination. Alternatively, when the EDID of the connection display information is not registered in the white list and is not registered in the black list, the combination determination unit 35 determines that the operation of the display 3 is guaranteed by the application software 5, resulting in permissiveness in the determination. A case in which the EDID of the connection display information is registered in the white list and is registered in the black list is excluded in advance.

The manufacturer or the like of the electronic whiteboard 2 can update the EDID (white list) that guarantees the operation or the EDID (the black list) that does not guarantee the operation by using (based on) a report from the user.

As described above, the electronic whiteboard 2 according to the present embodiment determines whether the operation of the display 3 connected to the information processing device 4 on which the application software 5 is executed is guaranteed or not, and notifies the user, if the operation is not guaranteed, of the message indicating that the operation is not guaranteed.

Accordingly, it is possible to notifies the user of that the operation of the display 3 is not guaranteed before the application software 5 is launched to use a function of the electronic whiteboard 2. In addition, even when functions, which cannot be used because the operation is not guaranteed, or failures, which occurs because the operation is not guaranteed, are difficult to be noticed, it is possible to make sure to notify the user of that the operation is not guaranteed.

### Other Example for Application

Although the embodiments of the disclosure have been described and illustrated above, such description is not intended to limit the disclosure to the illustrated embodiments. Numerous additional modifications and variations are possible in light of the above teachings. It is therefore to be understood that within the scope of the appended claims, the embodiments may be practiced otherwise than as specifically described herein. For example, elements and/or features of different illustrative embodiments may be combined with each other and/or substituted for each other within the scope of this disclosure and appended claims.

Any one of the above-described operations may be performed in various other ways, for example, in an order different from the one described above.

In the present embodiment, the display 3 displays a message or the like indicating that the display 3 of which the operation is not guaranteed by the application software 5 is connected, however the disclosure is not limited thereto. In addition or alternatively, an audio message or the like may be output. In addition or alternatively, the application software 5 may light up a warning lamp or display an icon to indicate that the display 3 of which the operation is not guaranteed is connected. In addition or alternatively, an e-mail may be sent to the administrator.

In addition, in the present embodiment, the application software 5 determines whether the operation of the display 3 is guaranteed or not. However, the disclosure is not limited thereto and can be applied in a case where a component which is hardware or software operating in the information processing device 4 does not guarantee the operation of the display 3. For example, it also can be applied in a case where an OS, a basic input output system (BIOS), or other firmware does not guarantee the operation of the display 3.

In addition, whether operation of a device connectable to an electronic whiteboard is guaranteed by the electronic whiteboard or not can be made and a result of the determination can be output. For example, whether operation of a PC, a videoconference terminal, a camera (imaging device), a microphone, a speaker, or the like connected to an electronic apparatus is guaranteed or not can be made. In relation to an information processing device or application software, the same can be applied.

In addition, the embodiment described above, each of the warning screen 302, the initial screen 303, and the message screen 310 is described as a full screen. However, the embodiments of the disclosure are not limited thereto, and each screen may not always have to be a full screen. For example, in some embodiments, one of the warning screen 302, the initial screen 303, and the message screen 310 may be displayed at the same time with another screen so that the one screen is displayed on the other screen, or the screens are displayed side by side. Alternatively, for example, the warning screen 302 or the message screen 310 may be a pop-up window and displayed at the same time with another screen.

In addition, the functional configuration illustrated in FIG. 5 is divided into blocks based on main functions of the electronic whiteboard 2, in order to facilitate understanding the processes performed by the electronic whiteboard 2. No limitation is intended by how the processes are divided or by the name of the processes. A process implemented by the electronic whiteboard 2 may be divided to a larger number of processes depending on the content of process. In addition, a step of the process may be divided to more than one processes.

Each of the functions of the present embodiment, as illustrated in FIG. 5, may be implemented by one or more processing circuits. The processing circuits includes a programmed processor, as a processor includes circuitry. A processing circuit also includes devices such as an application specific integrated circuit (ASIC), a digital signal processor (DSP), a field programmable gate array (FPGA), a system on a chip (SOC), a graphics processing unit (GPU), and conventional circuit components arranged to perform the recited functions.

The display information acquisition unit 34 is an example of a display information acquisition unit, the operation guarantee display information storage unit 37 is an example of a storage unit, and the combination determination unit 35 is an example of a first determination unit (determination unit), and a display control unit 33 is an example of an output unit, and the installer determination unit 38 is an example of a second determination unit (another determination unit). The installer storage unit 39 is an example of a second storage unit (another storage unit).

The present disclosure may be implemented in any convenient form, for example using dedicated hardware, or a mixture of dedicated hardware and software. The present disclosure may be implemented as computer software implemented by one or more networked processing apparatuses. The processing apparatuses can comprise any suitably programmed apparatuses such as a general purpose computer, personal digital assistant, mobile telephone (such as a WAP or 3G-compliant phone) and so on. Since the present disclosure can be implemented as software, each and every aspect of the present disclosure thus encompasses computer software implementable on a programmable device. The computer software can be provided to the programmable device using any conventional carrier medium (carrier means). The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An electronic whiteboard (2) comprising an information processing device (4) connectable to a display (3), the electronic whiteboard (2) including:
a display information acquisition unit (201, 34) to acquire first display information that is information on the display (3) being connected to the information processing device (4);
a storage unit (37) to store second display information that indicates whether operation of the display (3) in cooperation with the electronic whiteboard (2) is guaranteed;
a determination unit (201, 35) to compare the first display information and the second display information to determine whether the operation of the display (3) is guaranteed; and
an output unit (201, 33) to output a result of the determination, when the result indicates that the operation of the display (3) is not guaranteed.

2. The electronic whiteboard (2) according to claim 1,
wherein the second display information is information at least one display of which operation is guaranteed by application software that is executed in the information processing device (4) or of which the operation is not guaranteed by the application software.

3. The electronic whiteboard (2) according to claim 2,
wherein
the determination unit (201, 35) determines, when the application software is activated, whether the operation of the display (3) being connected to the information processing device (4) is guaranteed, and
the output unit (201, 33) displays a warning screen that indicates that the operation of the display (3) is not guaranteed, before displaying an initial screen that is for use of functions of the electronic whiteboard (2),
wherein the warning screen is displayed until a user input for confirmation of the warning screen is received.

4. The electronic whiteboard (2) according to claim 3, further comprising another determination unit (201, 38) to determine, when the application software is activated, whether an installer to install new application software is stored in another storage unit (39), and
wherein the output unit (201, 33) displays a message screen that indicates that the new application software is installable, before displaying the initial screen, which is for the use of the functions of the electronic whiteboard (2), and the warning screen are displayed.

5. The electronic whiteboard (2) according to claim 4,
wherein, when a user input that indicates to perform installation of the new application software is received on the message screen, the installer is deleted after installing the new application software, and the electronic whiteboard (2) is restarted, and
wherein, when the new application software is activated in response to restart of the electronic whiteboard (2) and the determination unit (201, 35) determines that the operation of the display (3) being connected to the information processing device (4) is guaranteed, the output unit (201, 33) displays the initial screen, which is for the use of the functions of the electronic whiteboard (2), without displaying the warning screen.

6. The electronic whiteboard (2) according to any one of claims 4 and 5,
wherein the installation of the new application software is performed according to a user operation.

7. The electronic whiteboard (2) according to any one of claims 1 to 6,
wherein each of the first display information and the second display information is extended display identification data (EDID).

8. The electronic whiteboard (2) according to claim 7,
wherein the second display information is the EDID of one or more displays (3) of which the operation is guaranteed by each of one or more versions of the application software executed in the information processing device (4).

9. A displaying system (2), comprising:
the information processing device (4) according to claim 1; and
a display (3) connectable to the information processing device (4) and having the first display information that indicates a type of the display (3).

10. An output control method, performed by an electronic whiteboard (2) in which a display (3) and an information processing device (4) connected to each other, the method comprising:
acquiring (S20) first display information that is information on the display (3) being connected to the information processing device (4);
comparing (S50) the first display information and second display information to determine whether operation of the display (3) is guaranteed, wherein the second display information indicates whether the operation of the display (3) is guaranteed by the electronic whiteboard (2); and
outputting (S60, S70) a result of the determination, when the result indicates that the operation of the display (3) is not guaranteed.

11. A carrier means carrying a computer readable code for controlling a computer to carry out the method of claim 10.
